# EUROPEAN PATENT APPLICATION

(11) **EP 4 582 862 A1**
(43) Date of publication of application: **09.07.2025**
(21) Application number: 24812359.8
(22) Date of filing: 29.10.2024
(51) Int. Cl.: G03B 3/10, G03B 13/36, G03B 17/12, G03B 5/06, G03B 30/00, H04N 23/55, H04N 23/51, H04N 23/54, H04N 23/57, H05K 9/00

(54) **ELECTRONIC DEVICE COMPRISING CAMERA MODULE**

(30) Priority: 31.10.2023 KR 20230148454; 27.11.2023 KR 20230166975
(71) Applicant: Samsung Electronics Co., Ltd., Suwon-si, Gyeonggi-do 16677 (KR)
(72) Inventor: KIM, Bongchan, Suwon-si, Gyeonggi-do 16677 (KR); BYON, Kwangseok, Suwon-si, Gyeonggi-do 16677 (KR); PARK, Jaehyoung, Suwon-si, Gyeonggi-do 16677 (KR); SHIM, Jaekyu, Suwon-si, Gyeonggi-do 16677 (KR)
(74) Representative: Arnold & Siedsma
(86) International application number: PCT/KR2024/016634
(87) International publication number: WO 2025/095528

(57) **Abstract**

A camera module according to an embodiment disclosed herein may include a lens assembly, an AF carrier in which at least a portion of the lens assembly is located, a camera housing configured to receive the AF carrier, an AF actuator configured to drive the AF carrier to move in an optical axis direction with respect to the camera housing and having a portion disposed on the AF carrier and the camera housing, a first guide groove extending on a surface of the camera housing in the optical axis direction, a second guide groove extending on a surface of the AF carrier in the optical axis direction and facing the first guide groove, at least one first AF ball disposed between the first guide groove and the second guide groove, and a recess disposed on one of the camera housing and the AF carrier and facing the at least one first AF ball. Various other embodiments are possible.

## Description

### [Technical Field]

Various embodiments of the disclosure relate to a camera module.

### [Background Art]

Various electronic devices, such as a smart phone, a tablet PC, a portable multimedia player (PMP), a personal digital assistant (PDA), a laptop personal computer (PC), and a wearable device, such as a wristwatch, a head-mounted display (HMD), include a camera and may capture images by using the camera.

The increase in users photographing an image or video by using an electronic device may drive improvements in performances of a camera include in the electronic device. For example, when acquiring an image by using the camera included in the electronic device, in order to acquire a clear image, it may be necessary to adjust the focus on the subject or compensate for shaking (e.g., a hand tremor) that may occur when photographing the subject.

The above information may be presented as related art for the purpose of assisting in understanding the disclosure. No assertion or decision is made as to whether any of the above might be applicable as prior art with regard to the disclosure.

### [Disclosure of Invention]

### [Technical Problem]

Researching has been conducted to reduce the thickness of electronic devices in order to enhance aesthetics thereof. The thickness of an electronic device may be associated with the thickness of an electronic component disposed inside the electronic device. In general, a high-performance camera may have a thickness thicker than that of a low-performance camera due to component structures. In case that a high-performance camera is disposed in the electronic device, the camera may protrude towards the rear direction of the electronic device, which may reduce the overall aesthetics of the electronic device. Accordingly, there is a growing need to reduce the thickness of cameras while maintaining the performance thereof.

Meanwhile, the thickness of the camera may be determined by the height of a camera housing or the height of an AF carrier disposed inside the camera housing. A camera lens is disposed in the AF carrier and the AF carrier is moved in a direction of an optical axis of the lens to adjust a focus of a subject. An AF ball configured to guide the movement of the AF carrier in the optical axis direction may be disposed between the AF carrier and the camera housing. The AF ball may move in the optical axis direction of the lens along a guide groove disposed on the camera housing and the AF carrier. A driving distance of the AF ball in the optical axis direction may be associated with the height of the AF carrier and the height of the camera housing. Accordingly, in case that the height of the AF carrier and the height of the camera housing are reduced without considering the driving distance of the AF ball, there may be a problem with the movement of the AF carrier in the optical axis direction as the AF ball does not secure enough driving distance.

The technical subjects pursued in the present disclosure may not be limited to the above-mentioned technical subjects, and other technical subjects which are not mentioned may be clearly understood, through the following descriptions, by those skilled in the art to which the present disclosure pertains.

### [Solution to Problem]

A camera module according to an embodiment of the disclosure may include a lens assembly, an AF carrier in which at least a portion of the lens assembly is located, a camera housing configured to receive the AF carrier, an AF actuator configured to drive the AF carrier to move in an optical axis direction with respect to the camera housing and having a portion disposed on the AF carrier and the camera housing, a first guide groove extending on a surface of the camera housing in the optical axis direction, a second guide groove extending on a surface of the AF carrier in the optical axis direction and facing the first guide groove, at least one first AF ball disposed between the first guide groove and the second guide groove, and a recess disposed on one of the camera housing and the AF carrier and facing the first AF ball.

An electronic device according to an embodiment of the disclosure may include a lens assembly, an AF carrier in which at least a portion of the lens assembly is located, a camera housing configured to receive the AF carrier, an AF actuator configured to drive the AF carrier to move in an optical axis direction with respect to the camera housing and having a portion disposed on the AF carrier and the camera housing, a first guide groove extending on a surface of the camera housing in the optical axis direction, a second guide groove extending on a surface of the AF carrier in the optical axis direction and facing the first guide groove, at least one first AF ball disposed between the first guide groove and the second guide groove, and a recess disposed on one of the camera housing and the AF carrier and facing the first AF ball.

### [Advantageous Effects of Invention]

An embodiment disclosed herein may suggest a method for reducing the height of the camera module while maintaining the optical axis direction driving distance of the AF ball. For example, the height of the AF carrier and the height of the camera housing may be reduced while the length of the guide groove in which the AF ball is disposed, the optical axis direction driving distance of the AF ball, and the optical axis direction driving distance of the AF carrier are maintained. Therefore, the camera module having reduced thickness without sacrificing performance may help reduce the thickness of the electronic device.

Advantageous effects obtainable from the disclosure may not be limited to the above - mentioned effects, and other effects which are not mentioned may be clearly understood, through the following descriptions, by those skilled in the art to which the disclosure pertains.

### [Brief Description of Drawings]

With regard to the description of the drawings, the same or like reference signs may be used to designate the same or like elements.
FIG. 1 is a block diagram illustrating an electronic device in a network environment according to various embodiments.
FIG. 2 is a block diagram illustrating a camera module according to various embodiments.
FIG. 3A is a perspective view of a camera module according to an embodiment of the disclosure.
FIG. 3B is a front view of a camera module according to an embodiment of the disclosure.
FIG. 4A is an assembly view of a camera module according to an embodiment of the disclosure.
FIG. 4B is an assembly view of a camera module including an OIS carrier, an OIS magnet, and an OIS coil according to an embodiment of the disclosure.
FIG. 5A is a lateral view of a camera module according to an embodiment of the disclosure.
FIG. 5B is an enlarged of a first rail.
FIG. 6 is a comparison view of an embodiment in which a recess is not disposed on a camera housing and an embodiment in which a recess is disposed on a camera housing according to an embodiment of the disclosure.
FIGS. 7A and 7B are views of the recess of FIG. 3A in the -Z direction.
FIG. 8 is a sectional view of a camera module taken along line 3B-3B in FIG. 3B.
FIGS. 9A to 9D are views illustrating an embodiment in which a recess is disposed on a camera housing according to an embodiment of the disclosure.
FIGS. 10A to 10C are views illustrating an embodiment in which a recess is disposed on a camera housing according to an embodiment of the disclosure.
FIGS. 11A to 11C are views illustrating an embodiment in which a recess is disposed on an AF carrier according to an embodiment of the disclosure.

### [Mode for the Invention]

In the following description, various embodiments of this document are described with reference to the attached drawings. It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

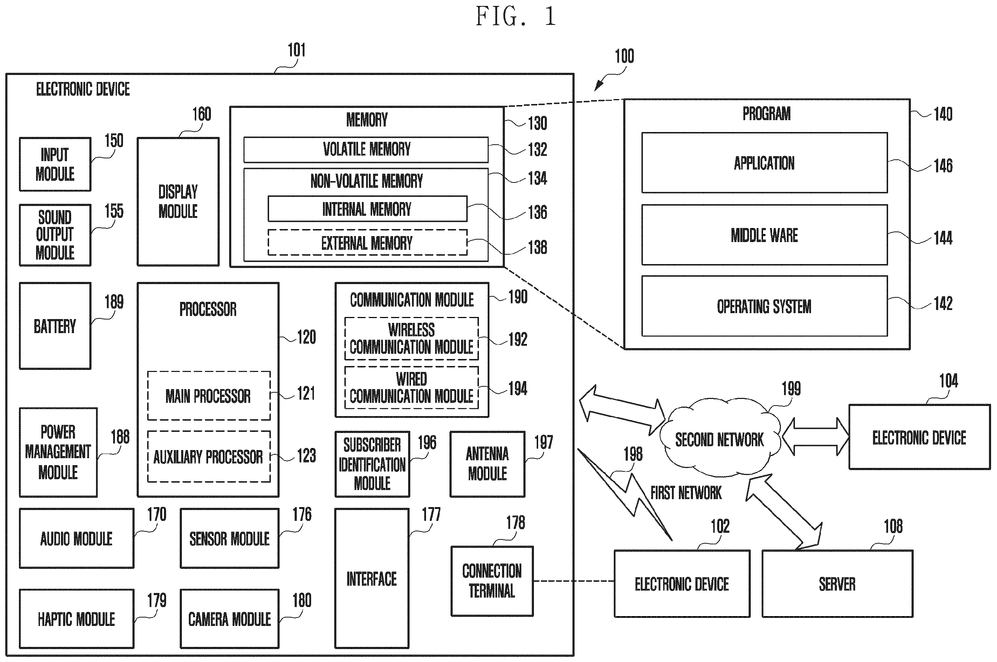

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

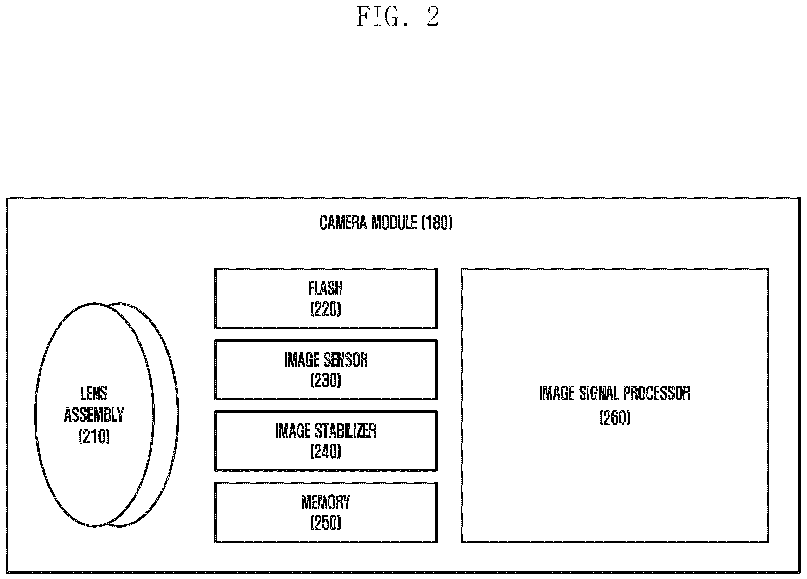

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules 180 may form a rear camera.

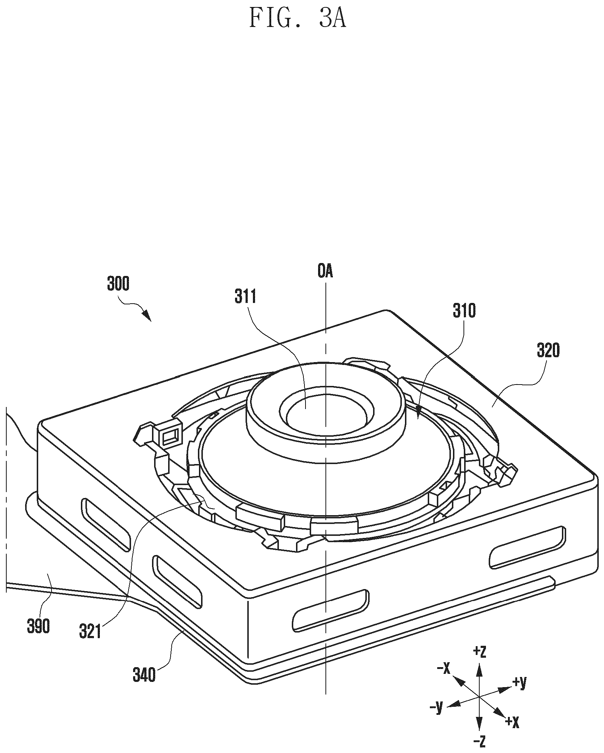

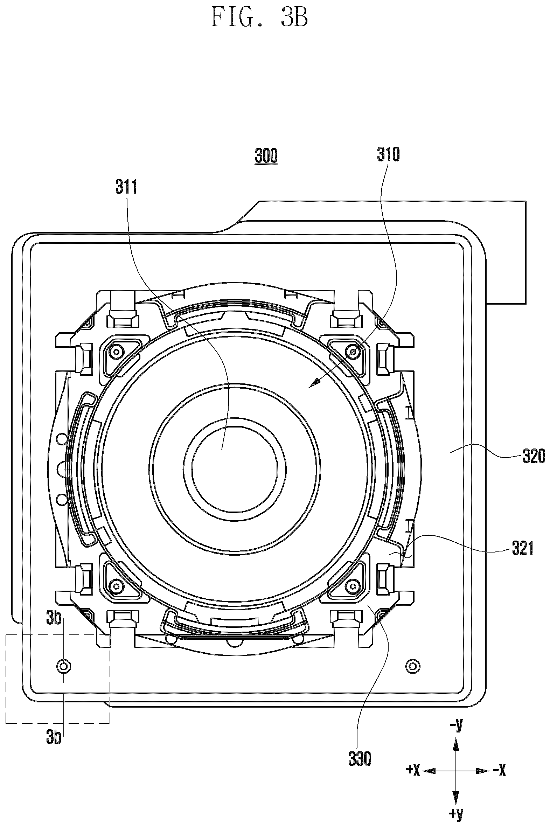

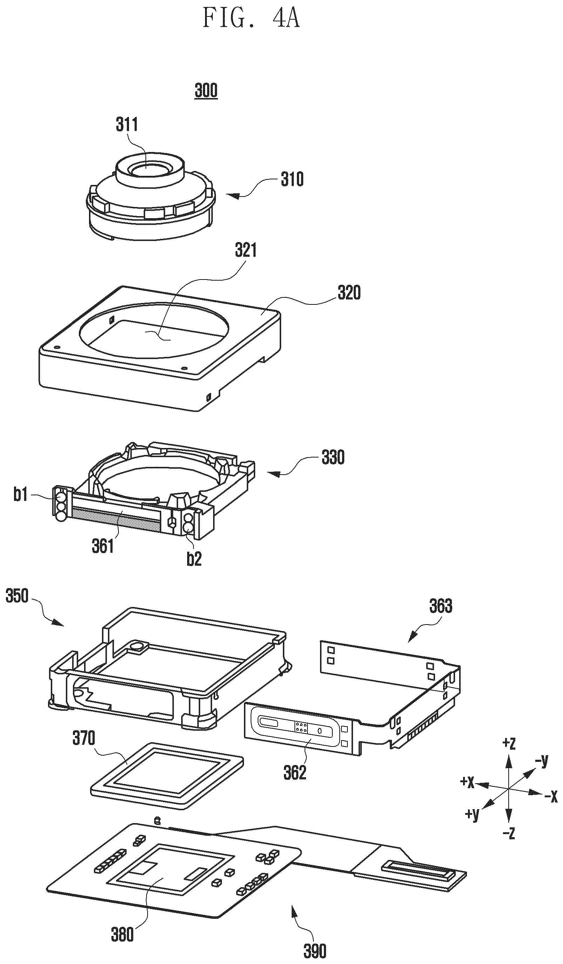

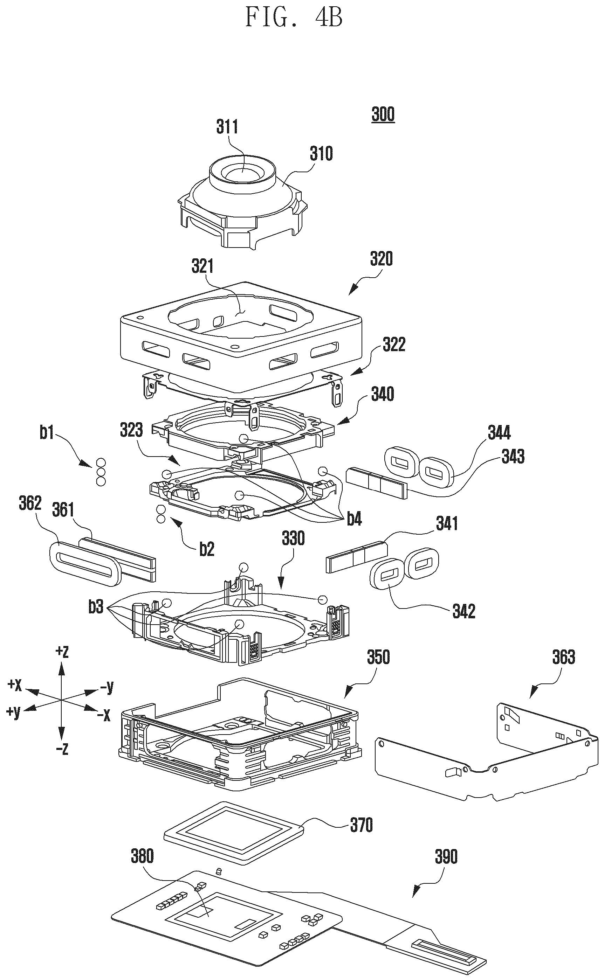

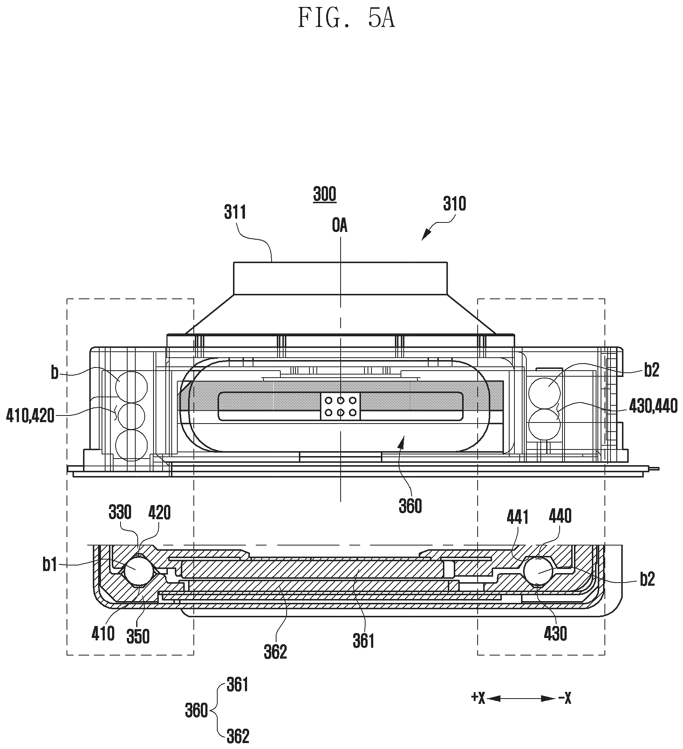

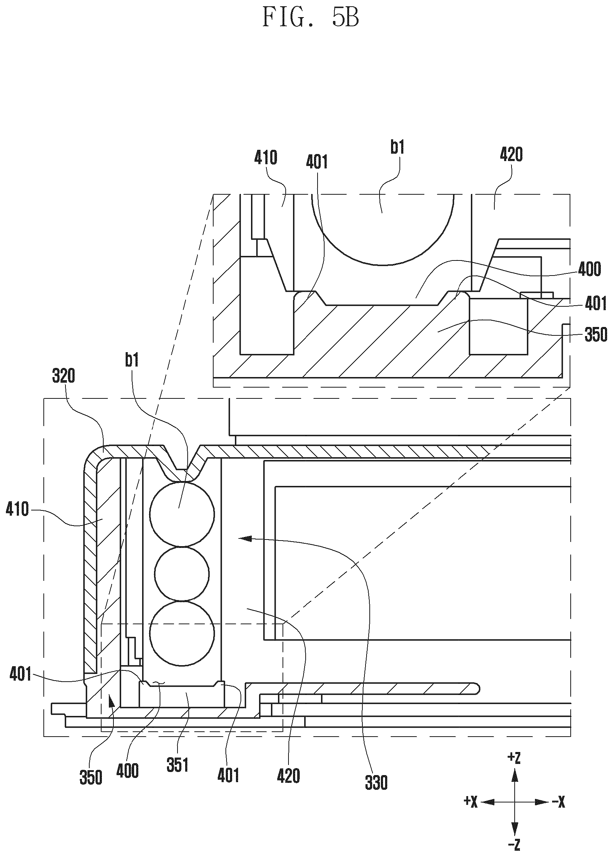

FIG. 3A is a perspective view of a camera module according to an embodiment of the disclosure. FIG. 3B is a front view of a camera module according to an embodiment of the disclosure. FIG. 4A is an assembly view of a camera module according to an embodiment of the disclosure. FIG. 5A is a lateral view of a camera module according to an embodiment of the disclosure. FIG. 5B is an enlarged view of a first rail. FIG. 4B is an assembly view of a camera module including an OIS carrier, an OIS magnet, and an OIS coil according to an embodiment of the disclosure.

According to an embodiment of the disclosure, as shown in FIGS. 3A, 3B, 4A, and 4B, the camera module 300 (e.g., the camera module 180 in FIG. 2) may include a lens assembly 310, a shield can 320, an auto focus (AF) carrier 330, a camera housing 350, an AF actuator 360, a flexible printed circuit board (FPCB) 363, a first AF ball b1, a second AF ball b2, an infrared (IR) filter 370, and a printed circuit board 390 including an image sensor 380. At least one of components described above may be omitted or another component may be added. For example, the camera module 300 may include, as shown in FIG. 4B to be described below, an image stabilizer (OIS) carrier, a first OIS actuator (e.g., the first OIS magnet 341 and the first OIS coil 342 in FIG. 4B), a second OIS actuator (e.g., the second OIS magnet 343 and the second OIS coil 344 in FIG. 4B), and an OIS ball b3 or b4.

According to an embodiment, as shown in FIGS. 3A, 3B, 4A, and 4B, the lens assembly 310 may include one or more lens units 311 aligned and assembled therein. The lens assembly 310 may correspond to a lens barrel in which one or more lens units 311 are assembled. In an embodiment, the lens assembly 310 may be fixed to the AF carrier 330 and relatively move with respect to the image sensor 380 in an optical axis (e.g., the OA in FIG. 3A and/or the Z-axis direction in FIG. 4A) direction.

In an embodiment, at least a portion (e.g., a lens unit 321) of the lens assembly 320 may be located in an opening 321 of the shield can 320 to be exposed to the outside of the camera module 300.

According to an embodiment, as shown in FIGS. 3A, 3B, 4A, and 4B, the shield can 320 may be located outside the camera housing 350 to be coupled or fitted to the camera housing 350. According to an embodiment, the shield can 320 may be located at an outermost edge of the camera module 300 and surround the AF carrier 330 and the camera housing 350. In an embodiment, the shield can 320 may block or reduce electromagnetic waves generated externally so as to reduce occurrence of malfunctions of the camera module 300. In an embodiment, the shield can 320 may include an opening 321 configured to allow the lens unit 311 to be exposed to the outside of the camera module 300.

According to an embodiment, as shown in FIGS. 3A, 3B, 4A, and 4B, the AF carrier 330 may be disposed inside the camera housing 350. In an embodiment, the camera housing 350 may provide a space which has an upper surface open to allow the AF carrier 330 to be inserted therein and the AF carrier 330 to be seated therein. In an embodiment, the camera housing 350 may prevent and protect the AF carrier 330 from being separated due to movement.

In an embodiment, the AF carrier 330 may be disposed spaced a predetermined distance apart from a surface of the camera housing 350 so that the lens unit 311 of the lens assembly 310 may move in an optical axis (e.g., the Z-axis direction in FIG. 3) direction and adjust a focus for a subject.

According to an embodiment, the camera module 300 may move, under control of the processor 120, the AF carrier 330 to adjust a focus. In an embodiment, the AF carrier 330 may move in an optical axis (OA) direction (e.g., the Z-axis direction based on FIG. 4A) of the lens unit 311 with respect to the camera housing 350 through the AF actuator 360. In an embodiment, the AF actuator 360 may include an AF coil 362 disposed in the camera housing 350 and an AF magnet 361 disposed in the AF carrier 330. In an embodiment, the AF magnet 361 and the AF coil 362 may be disposed in the AF carrier 330 and the camera housing 350, respectively, to face each other. In an embodiment, the AF magnet 361 may be disposed between a second guide groove 420 and a fourth guide groove 440 on a surface of the AF carrier 330. The AF carrier 330 may move in the optical axis direction through electromagnetic force applied between the AF coil 362 and the AF magnet 361 to perform an auto focus (AF) function for automatically controlling a focus of a lens (e.g., the lens unit 311) with respect to the subject. For example, the processor 120 may control the AF actuator 330 through a driving circuit (e.g., a driver IC) (not shown) of the camera module 300 to move the AF carrier 330 substantially in the optical axis direction so as to perform the AF function. The lens assembly 310 may be fixed to the AF carrier 330 and move in the optical axis direction together with the AF carrier 330. Accordingly, the focus for a subject of the lens unit 311 may be adjusted according to movement of the lens assembly 310.

According to an embodiment, as shown in FIGS. 4A and 4B, the flexible printed circuit board 363 may surround an outer portion of the camera housing 350. In an embodiment, the flexible printed circuit board 363 may be electrically connected to the AF coil 362. When a signal is applied through the flexible printed circuit board 363, a current may flow on the AF coil 362. Accordingly, the AF carrier 330 may move in the optical axis direction (e.g., the Z-axis direction based on FIG. 4A) with respect to the camera housing 350 through electromagnetic force applied between the AF magnet 361 and the AF coil 362.

According to an embodiment, as shown in FIGS. 4A and 4B, the camera module 300 may include the printed circuit board 390 on which the image sensor 380 is disposed. In an embodiment, the IR filter 370 may be disposed to face the image sensor 380. In an embodiment, the IR filter 370 may correspond to a filter which selectively reflects or absorbs near-infrared wavelengths and blocks same from entering the image sensor 380. In an embodiment, the image sensor 380 and the IR filter 370 may be disposed inside the camera housing 350.

According to an embodiment, the AF actuator 360 may include an AF magnet insert yoke, an AF magnet 361, an AF coil 362, an AF back yoke, and at least one AF magnet detection sensor. In an embodiment, at least a portion of the AF actuator 360 may be disposed on the camera housing 350 and the AF carrier 330. In an embodiment, the AF magnet insert yoke and the AF magnet 361 may be sequentially disposed on a surface of the AF carrier. The AF back yoke and the AF coil may be sequentially disposed on a surface of the camera housing 350 facing the surface of the AF carrier. For example, the AF magnet 361 and the AF coil 362 may be disposed between the AF magnet insert yoke and the AF back yoke. In an embodiment, the AF magnet insert yoke and the AF back yoke may prevent a magnetic flux of the AF magnet 361 from leaking. In an embodiment, the AF magnet insert yoke and the AF back yoke may include a metal and cause the AF carrier 330 to maintain a location thereof in the camera housing 350 through the AF magnet 361 and magnetic force. For example, the AF magnet 361 and the AF coil 362 are disposed between the AF magnet insert yoke and the AF back yoke and thus electromagnetic force may be concentrated between the AF magnet 361 and the AF coil 362. Accordingly, the AF carrier 330 may be coupled to the camera housing 350 through the magnetic force.

In an embodiment, the AF magnet detection sensor may detect the Z-axis direction location of the AF magnet 361. For example, the AF magnet detection sensor may detect a location of the AF magnet 361 on the Z-axis, which is disposed in the AF carrier 330 and has moved in the optical axis direction (e.g., the OA in FIG. 3A and/or the Z-axis direction in FIG. 4A) together with the AF carrier 330. In an embodiment, the at least one AF magnet detection sensor may be disposed on a hole or a center of the AF coil 362. In an embodiment, the AF magnet detection sensor may be disposed adjacent to the AF coil 362. For example, the AF magnet detection sensor may be disposed on a surface of the camera housing 350 together with the AF coil 362. In an embodiment, the at least one AF magnet detection sensor may detect a location of the AF magnet 361. For example, at least one AF magnet detection sensor 415 may include at least one driving IC (not shown). The driving IC (not shown) may control a current passing through the AF coil 362 and change electromagnetic force between the AF magnet 361 and the AF coil 362 so as to control the AF carrier 330 to move along the optical axis direction.

According to an embodiment, as shown in FIG. 4B, the camera module 300 may include, based on the configuration of FIG. 4A, an image stabilizer (OIS) carrier, a first OIS actuator (e.g., the first OIS magnet 341 and the first OIS coil 342 in FIG. 4B), a second OIS actuator (e.g., the second OIS magnet 343 and the second OIS coil 344 in FIG. 4B), and an OIS ball b3 or b4. In an embodiment, the OIS carrier 340 may receive the lens assembly 310. In an embodiment, the OIS carrier 340 may be disposed in the AF carrier 330 and move in a direction (e.g., the X-axis direction and/or the Y-axis direction based on FIG. 3A) perpendicular to the optical axis (e.g., the optical axis (OA) in FIG. 3A) with respect to the AF carrier 330 so as to be used for an optical image stabilizer for correcting shaking of an image.

In an embodiment, referring to FIG. 4B, a stopper 322 may be coupled to or fitted into the AF carrier 330. The stopper 322 may prevent the OIS carrier 340 from separating from the AF carrier 330. In an embodiment, the stopper 322 may include an opening corresponding to the lens assembly 310.

In an embodiment, referring to FIG. 4B, a middle guide 323 may prevent the OIS carrier 340 and/or the lens assembly 310 from rotating when the OIS carrier 340 moves along the X-axis and/or the Y-axis to correct shaking.

According to an embodiment, the camera module 300 may move, under control of the processor 120, the OIS carrier 340 to correct shaking of an image. In an embodiment, the OIS carrier 340 may move, through a first OIS actuator and a second OIS actuator, in a direction (e.g., the X-axis direction or the Y-axis direction based on FIG. 3A) substantially perpendicular to the optical axis with respect to the AF carrier 330. In an embodiment, the first OIS actuator may include a first OIS coil 342 disposed on a surface of the camera housing 350 excluding the surface on which the AF coil 362 is disposed, and a first OIS magnet 341 disposed on the OIS carrier 340 to face the first OIS coil 342. The OIS carrier 340 may move in the X-axis direction substantially perpendicular to the optical axis through electromagnetic force applied between the first OIS coil 342 and the first OIS magnet 341. In an embodiment, the second OIS actuator may include a second OIS coil 344 disposed on a surface of the camera housing excluding the surfaces on which the AF coil 362 and the first OIS coil 342 are disposed, and a second OIS magnet 343 disposed on the OIS carrier 340 to face the second OIS coil 344. The OIS carrier 340 may move in the Y-axis direction substantially perpendicular to the optical axis through electromagnetic force applied between the second OIS coil 344 and the second OIS magnet 343. In another embodiment, the OIS carrier 340 may move in the Y-axis direction substantially perpendicular to the optical axis through electromagnetic force applied between the first OIS coil 342 and the first OIS magnet 341. The OIS carrier 340 may move in the X-axis direction substantially perpendicular to the optical axis through electromagnetic force applied between the second OIS coil 344 and the second OIS magnet 343. Accordingly, the OIS carrier 340 may perform an optical image stabilizer for correcting shaking of an image through electromagnetic force applied between the OIS coil and the OIS magnet.

According to an embodiment, the flexible printed circuit board 363 may be electrically connected to the first OIS coil 342 and the second OIS coil 344. When a signal is applied through the flexible printed circuit board 363, a current may flow on the first OIS coil 342 and the second OIS coil 344.

According to an embodiment, at least one OIS ball b3 or b4 may be disposed between the AF carrier 330 and the OIS carrier 340. In an embodiment, multiple OIS balls b3 and b4 may each correspond to a bearing ball. The OIS ball b3 or b4 may guide, when the OIS carrier 340 moves with respect to the AF carrier 330 through electromagnetic force of the first OIS actuator and/or the second OIS actuator, movement of the OIS carrier 340 in the X-axis (e.g., the X-axis in FIG. 4B) or the Y-axis (e.g., the Y-axis in FIG. 4B).

In an embodiment, at least one first OIS ball b3 may be disposed between the AF carrier 330 and the middle guide 323 to guide rolling movement of the middle guide 323 with respect to the AF carrier 330 in the X-axis direction or the Y-axis direction. In an embodiment, the first OIS ball b3 may be disposed in a flow groove (not shown) disposed on the AF carrier 330 to guide movement of the middle guide 323 in the X-axis direction or the Y-axis direction.

In an embodiment, at least one second OIS ball b4 may be disposed between the OIS carrier 340 and the middle guide 323 to guide rolling movement of the OIS carrier 340 with respect to the middle guide 323 in the X-axis direction or the Y-axis direction. In an embodiment, the second OIS ball b4 may be disposed in a flow groove disposed on the middle guide 323 to guide movement of the OIS carrier 340 in the X-axis direction or the Y-axis direction.

According to an embodiment, as shown in FIGS. 4A, 4B, 5A, and 5B, at least one AF ball b1 or b2 (e.g., a first AF ball b1 and a second AF ball b2) may be disposed between the AF carrier 330 and the camera housing 350. In an embodiment, the AF ball b1 or b2 may correspond to a bearing ball. In an embodiment, the AF ball b1 or b2 may guide, when the AF carrier 330 moves with respect to the camera housing 350 through electromagnetic force between the AF magnet 361 and the AF coil 362, movement of the AF carrier 330 in the optical axis (e.g., the optical axis (OA) in FIG. 3A) direction.

In an embodiment, referring to FIGS. 4A, 4B, and 5A, the AF ball b1 or b2 may include the first AF ball b1 and the second AF ball b2. In an embodiment, the first AF ball b1 may be disposed between a first guide groove 410 extending on the camera housing 350 in the optical axis (OA) direction and a second guide groove 420 extending on the AF carrier 330 in the optical axis (OA) direction. In an embodiment, the first guide groove 410 and the second guide groove 420 may face each other. In an embodiment, the first AF ball b1 may be disposed on a first rail surrounded by the first guide groove 410 and the second guide groove 420 to move in the optical axis direction. In an embodiment, there may be three first AF balls b1, but the number may not be limited thereto.

In an embodiment, referring to FIGS. 4A, 4B, and 5A, the second AF ball b2 may be disposed between a third guide groove 430 extending on the camera housing 350 in the optical axis (OA) direction and a fourth guide groove 440 extending on the AF carrier 330 in the optical axis (OA) direction. In an embodiment, the third guide groove 430 and the fourth guide groove 440 may face each other. In an embodiment, the second AF ball b2 may be disposed on a second rail surrounded by the third guide groove 430 and the fourth guide groove 440 to move in the optical axis direction. In an embodiment, there may be two second AF balls b2, but the number may not be limited thereto.

According to an embodiment, the camera module 300 may include the first rail defined by the first guide groove 410 and the second guide groove 420 to guide the first AF ball b1 or the second rail defined by the third guide groove 430 and the fourth guide groove 440 to guide the second AF ball, one of the rails being a main rail and the other being a sub-rail. In an embodiment, the movement of the AF carrier 330 in the optical axis (OA) direction with respect to the camera housing 350 may be substantially guided through the first AF ball b1 disposed on the main rail. In an embodiment, the second AF ball b2 disposed on the sub-rail may assist the movement of the AF carrier 330 with respect to the camera housing 350 in the optical axis (OA) direction. In an embodiment, the longer length of the main rail may prevent tilting of the AF carrier 330 guided through the first AF ball b1 disposed on the main rail and/or tilting of the lens assembly 310 disposed on the AF carrier 330. Accordingly, the main rail may be configured to have a length relatively longer than that of the sub-rail.

Hereinafter, it will be described under the assumption that the first rail is the main rail and the second rail is the sub-rail. Accordingly, the length of the first rail in the optical axis (OA) direction may be longer than the length of the second rail in the optical axis (OA) direction.

According to an embodiment, as shown in FIG. 5A, the first guide groove 410 and the second guide groove 420 may be configured as a "V" shaped groove. For example, the first guide groove 410 may be disposed on a surface of the camera housing 350 as a "V" shaped groove. The second guide groove 420 may be disposed on a surface of the AF carrier 330 as a "V" shaped groove. The first AF ball b1 may have limitation in movement in a direction (e.g., the X-axis direction in FIG. 4A) perpendicular to the optical axis (e.g., the optical axis (OA) in FIG. 3A) because the first AF ball is positioned in the first guide groove 410 and the second guide groove 420 configured in the "V" shaped grooves.

According to an embodiment, one of the third guide groove 430 and the fourth guide groove 440 may be configured as a "V" shaped groove and the other may be configured as a groove including a plane in contact with the second AF ball b2. In an embodiment, referring to FIG. 5A, the third guide groove 430 may be configured as a negative "V" shaped groove on a surface of the camera housing 350, and the fourth guide groove 440 may be configured as a groove including a plane 441 in contact with the second AF ball b2. On the contrary, the third guide groove 430 may be configured as a groove including a plane 441 in contact with the second AF ball b2, and the fourth guide groove 440 may be configured as a negative "V" shaped groove on a surface of the camera housing 350.

In an embodiment, a distance between the first guide groove 410 and the second guide groove 420 may be different from a distance between the third guide groove 430 and the fourth guide groove 440. For example, referring to FIG. 5A, a first distance corresponding to the distance between the first guide groove 410 and the second guide groove 420 may be different from a second distance corresponding to the distance between the third guide groove 430 and the fourth guide groove 440. In an embodiment, the plane 441 located on a groove (e.g., the fourth guide groove 440) among the third guide groove 430 and the fourth guide groove 440 may compensate for a difference of the first distance and the second distance.

Meanwhile, in an embodiment, referring to FIG. 5A, the first guide groove 410 and the third guide groove 430 may be disposed on an identical surface of the camera housing 350. In an embodiment, the second guide groove 420 and the fourth guide groove 440 may be disposed on an identical surface of the AF carrier 330.

According to an embodiment, as shown in FIG. 5B, the camera module 300 may include a recess 400 configured on one of the camera housing 350 and the AF carrier 330 and facing the first AF ball b1. In an embodiment, the first AF ball b1 may be seated on the recess 400 depending on a driving state of the AF carrier 330 through the AF actuator 360. For example, in a state in which the AF function of the camera module 300 is not operated, the first AF ball b1 may be located in the recess 400. On the contrary, in case that the AF carrier 330 moves with respect to the camera housing 350 in the optical axis (OA) direction in a state in which the AF function of the camera module 300 is operated, the first AF ball b1 may be in a state away from the recess 400.

In an embodiment, the recess 400 may be a space in which the first AF ball b1 is seated. In an embodiment, the recess 400 may be configured in various ways.

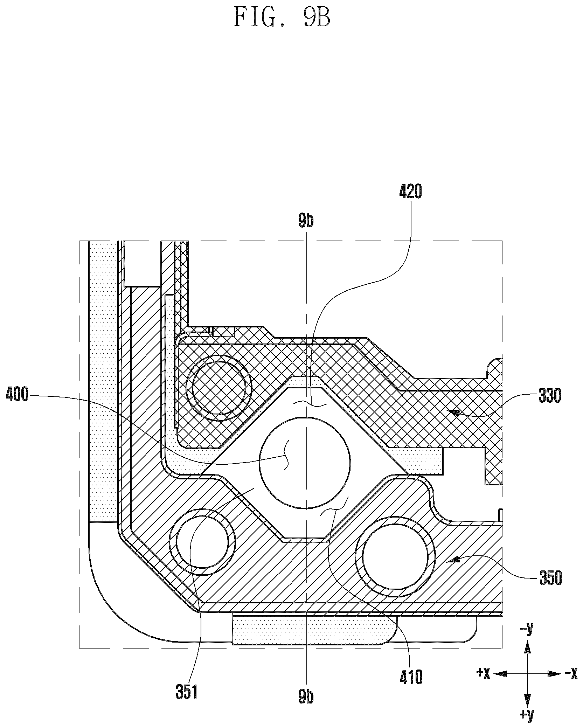

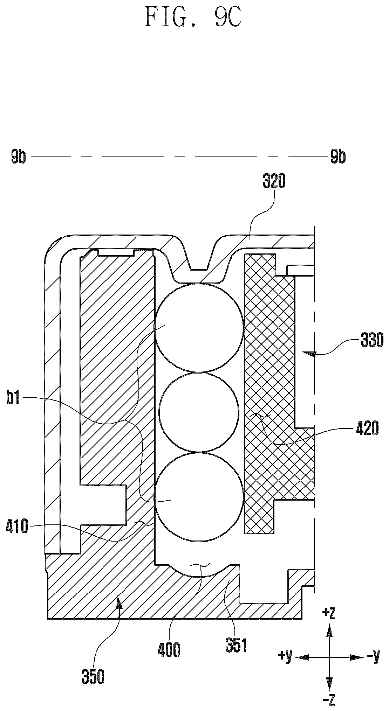

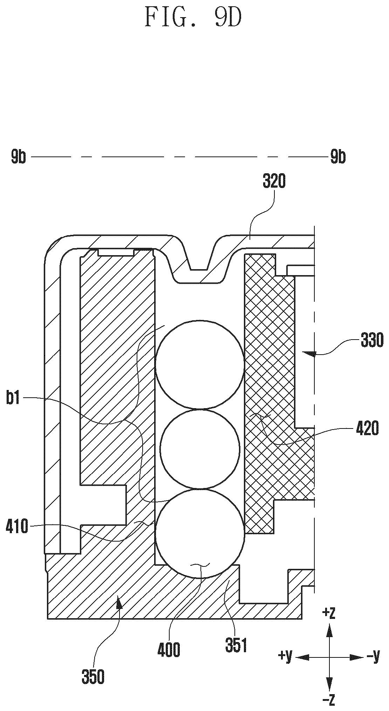

In an embodiment, the recess 400 may correspond to a groove (e.g., the recess 400 in FIG. 9C) disposed on at least one of the camera housing 350 and the AF carrier 330.

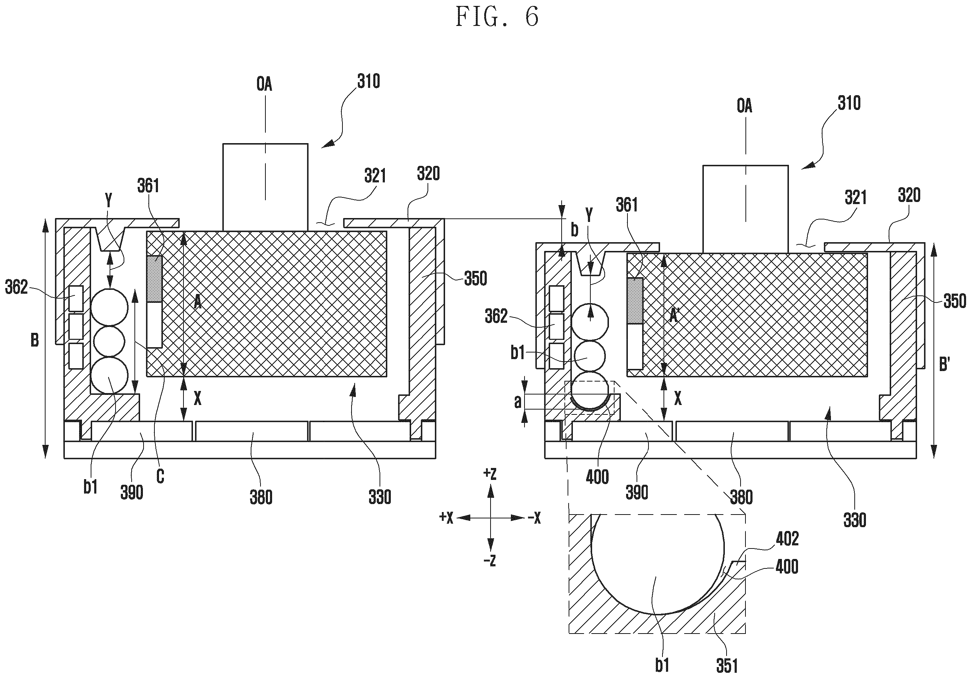

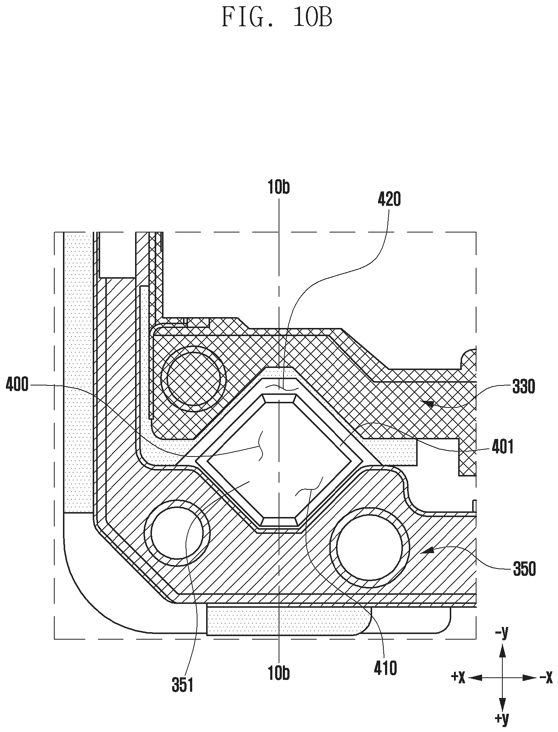

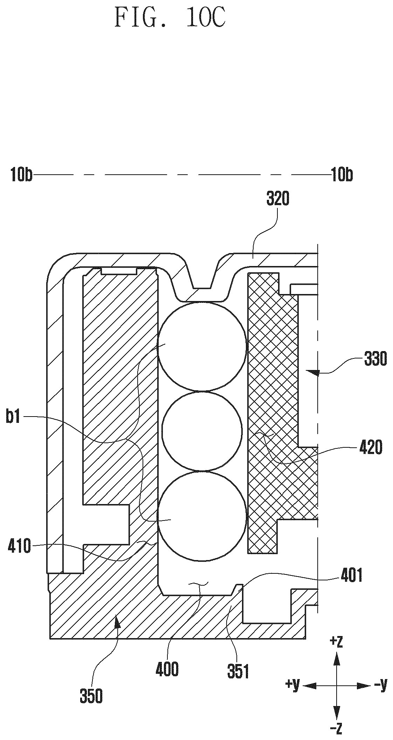

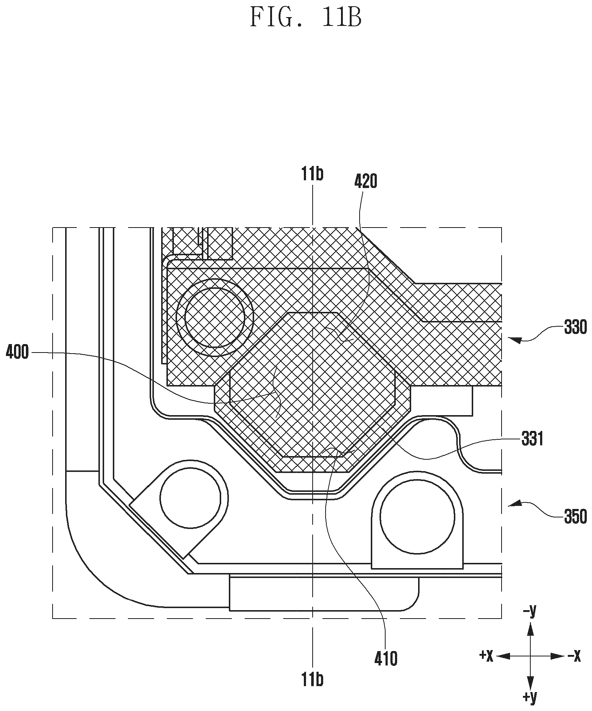

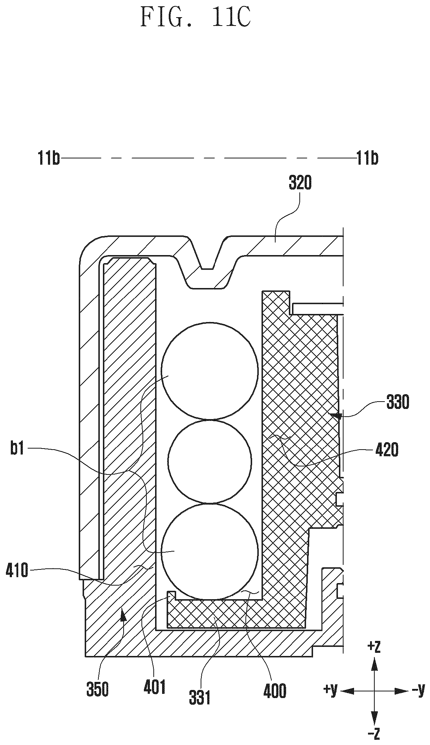

In an embodiment, the recess 400 may correspond to a space defined through a partition wall 401 (e.g., the partition wall 401 in FIGS. 10C and 11C) disposed on a surface on which the first AF ball b1 is seated among the camera housing 350 and the AF carrier 330. In an embodiment, the recess 400 may have a curved internal surface. In an embodiment, a radius of curvature of the internal surface of the recess 400 may be greater than that of the first AF ball b1 as shown in FIG. 6, or may be identical to that of the first AF ball b1 as shown in FIG. 9C. In addition thereto, the recess 400 may be configured in various shapes.

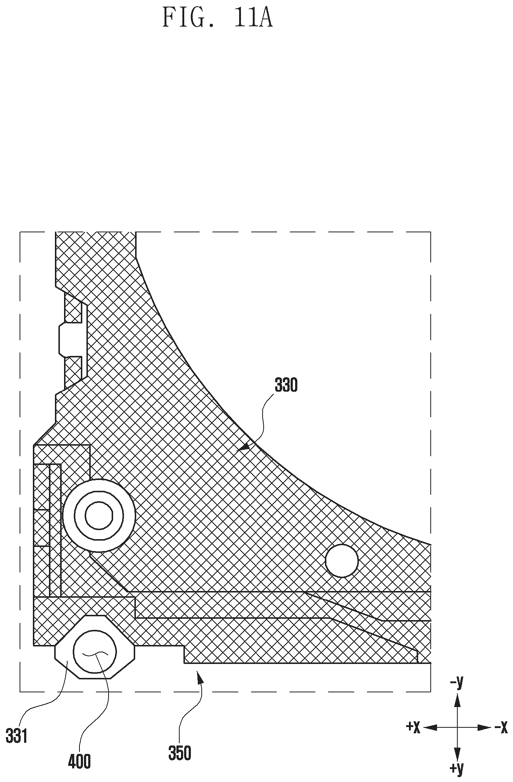

In an embodiment, referring to FIG. 5B or FIGS. 9A to 10C described below, the recess 400 may correspond to a groove disposed on a first seating part 351 of the camera housing 350. In an embodiment, the first seating part 351 may be connected to the first guide groove 410. The first AF ball b1 may be located in the recess 400 depending on a driving state of the AF carrier 330 and may move in the optical axis (OA) direction along the first guide groove 410 and the second guide groove 420. In an embodiment, referring to FIGS. 11A to 11C described below, the recess 400 may correspond to a groove disposed on a second seating part 331 of the AF carrier 330. In an embodiment, the second seating part 331 may be connected to the second guide groove 420. The first AF ball b1 may be located in the recess 400 depending on a driving state of the AF carrier 330 and may move in the optical axis (OA) direction along the first guide groove 410 and the second guide groove 420.

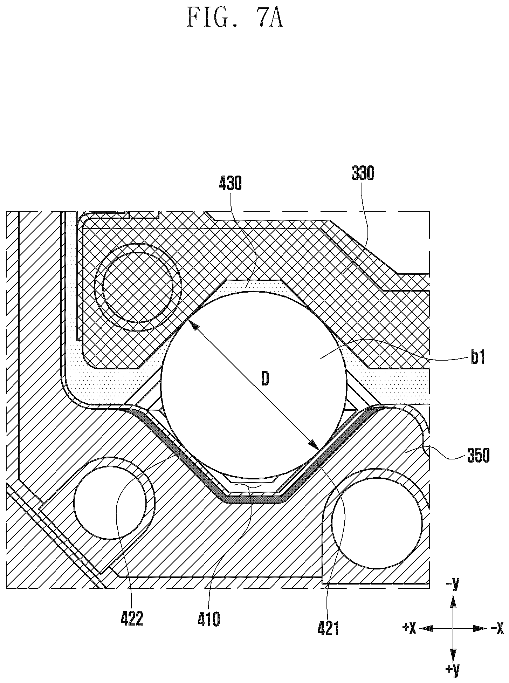

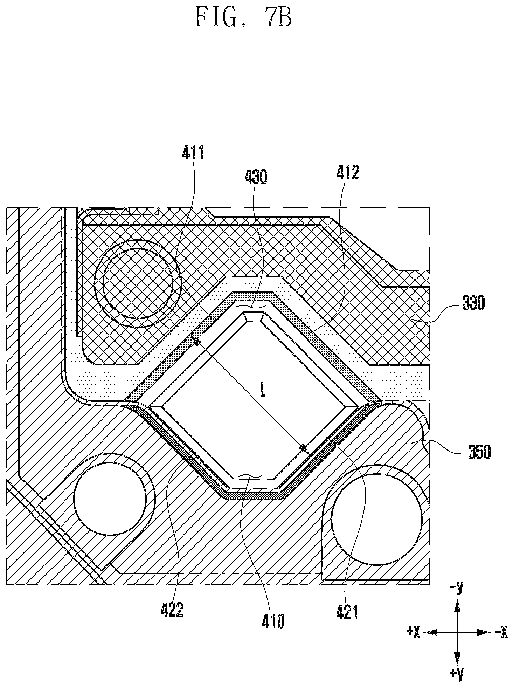

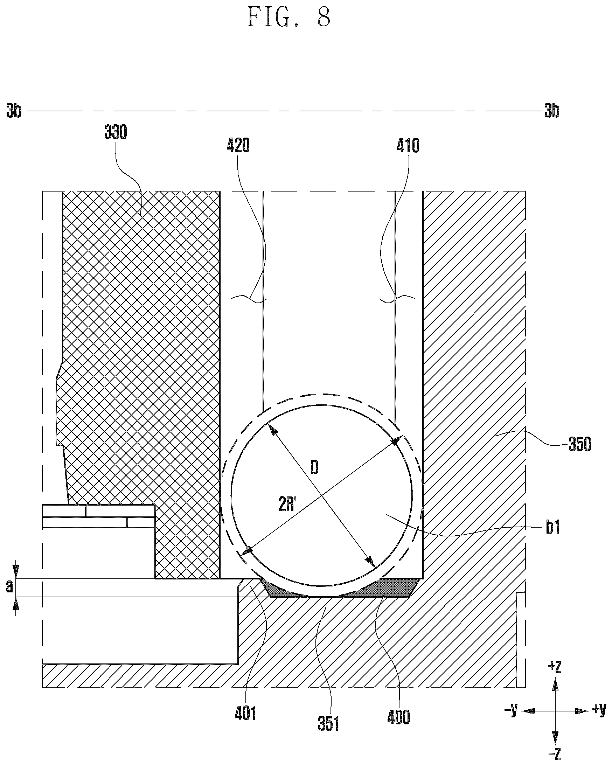

FIG. 6 is a comparison view of an embodiment in which a recess is not disposed on a camera housing and an embodiment in which a recess is disposed on a camera housing according to an embodiment of the disclosure. FIGS. 7A and 7B are views of the recess of FIG. 3A in the -Z direction. FIG. 8 is a sectional view of a camera module taken along line 3B-3B in FIG. 3B.

According to an embodiment, as shown in FIG. 6, since the recess 400 is disposed on the first seating part 351 of the camera housing 350, a height (e.g., a length in the Z-axis direction based on FIG. 6) of the camera module 300 may be reduced by a depth a of the recess 400. In an embodiment, referring to FIG. 6, due to the configuration of the recess 400, a first height A' (e.g., a length in the Z-axis direction based on FIG. 6) of a surface of the AF carrier 330 on which the second guide groove 420 is disposed and/or a second height B' (e.g., a length in the Z-axis direction based on FIG. 6) of a surface of the camera housing 350 on which the first guide groove 410 is disposed may be reduced by a first length b compared to a height B of the camera housing 350 of the camera module 300 in which the recess 400 is not configured and/or a height A of the AF carrier 330. In an embodiment, the first length b may be smaller than or equal to the depth a of the recess 400. Therefore, the height of the camera module 300 including the recess 400 may be reduced compared to the height of the camera module 300 not including the recess 400.

According to an embodiment, as shown in FIGS. 11A to 11C described below, since the recess 400 is disposed on the second seating part 331 of the AF carrier 330, the height of the camera module 300 may be reduced by the depth a of the recess 400. In an embodiment, due to the configuration of the recess 400, the second height B' of the camera housing 350 and/or the first height A' of the AF carrier 330 may be reduced by the first length b compared to the height B of the camera housing 350 of the camera module 300 in which the recess 400 is not configured and/or the height A of the AF carrier 330. In an embodiment, the first length b may be smaller than or equal to the depth a of the recess 400. Therefore, in an embodiment, the height of the camera module 300 including the recess 400 may be reduced compared to the height of the camera module 300 not including the recess 400.

In an embodiment, referring to FIG. 6, the first AF ball b1 in a state of being seated on the recess 400 may not deviate through a gap between the AF carrier 330 and the printed circuit board 390 due to an end 402 of the curved surface. In an embodiment, referring to FIG. 10C described below, the first AF ball b1 may not deviate through a gap between the AF carrier 330 and the printed circuit board 390 due to the partition wall 401 disposed on the first seating part 351 of the camera housing 350. In an embodiment, referring to FIG. 11C described below, the first AF ball b1 may not deviate through a gap between the AF carrier 330 and the printed circuit board 390 due to the partition wall 401 disposed on the second seating part 331 of the AF carrier 330.

According to an embodiment of the disclosure, the camera module 300 may include the recess 400. In an embodiment, since the recess 400 is configured on the camera housing 350 and/or the AF carrier 330, in the camera module 300, a length of the first rail defined by the first guide groove 410 and the second guide groove 420 may be extended by the depth a of the recess 400. In addition, compared to the camera module 300 not including the recess 400, the second height B' of the camera housing 350 and/or the first height A' of the AF carrier 330 may be reduced. For example, compared to the camera module 300 not including the recess 400, as for the camera module 300 including the recess 400, the second height B' of the camera housing 350 and/or the first height A' of the AF carrier 330 may be reduced by the first length b. The camera module 300 may reduce the second height B' of the camera housing 350 and/or the first height A' of the AF carrier 330 by the first length b by configuring the recess 400 on a surface of the camera housing 350 or the AF carrier 330 while maintaining the length of the first rail, a driving length X of the AF carrier 330 in the optical axis (OA) direction, and a driving length Y of the first AF ball b1. Therefore, compared to the height of the camera module 300 having no recess 400 configured therein, an overall height of the camera module 300 may be reduced and a thickness of the electronic device 101 may be reduced as well.

According to an embodiment, the first height A' of the surface of the AF carrier 330, on which the second guide groove 420 is disposed, may be greater than a value acquired by subtracting the depth a of the recess 400 from the sum of the sum C of diameters of the multiple AF balls b1 and the driving lengths X of the AC carrier 330 in the optical axis (OA) direction. In an embodiment, the second height B' of the camera housing 350 on which the first guide groove 410 is disposed may be greater than a value acquired by summing the first height A' of the AF carrier 330 and the driving length X of the AF carrier 330 in the optical axis (OA) direction.

According to an embodiment, as shown in FIG. 6, the first AF ball b1 may be driven on the first rail defined through the first guide groove 410 of the camera housing 350 and the second guide groove 420 of the AF carrier 330. In an embodiment, the driving length Y of the first AF ball b1 may be smaller than the length of the first rail. For example, the length of the first rail may be greater than or equal to a value acquired by summing the driving length Y of the first AF ball b1 and the sum C of diameters of the multiple first AF balls b1. Alternatively defined, the length of the first guide groove 410 in the optical axis (OA) direction and the length of the second guide groove 420 in the optical axis (OA) direction may be greater than or equal to a value acquired by summing the driving length Y of the first AF ball b1 and the sum C of diameters of the multiple first AF balls b1.

According to an embodiment, as shown in FIG. 6, in case that the driving length Y of the first AF ball b1 is equal to or greater than 0.5 times the driving length X of the AF carrier 330 in the optical axis (OA) direction, slip (e.g., sliding) between the AF carrier 330 and the first AF ball b1 may not occur. Accordingly, the driving length Y of the first AF ball b1 may be 0.5 times or more than the driving length X of the AF carrier 330 in the optical axis (OA) direction.

According to an embodiment, as shown in FIGS. 7A and 7B, a first guide surface 411 or 412 may be located inside the first guide groove 410. In an embodiment, the first guide surface 411 or 412 may include a (1-1)th guide surface 411 and a (1-2)th guide surface 412 adjacent to each other. In an embodiment, a second guide surface 421 or 422 may be located inside the second guide groove 420. In an embodiment, the second guide surface 421 or 422 may include a (2-1)th guide surface 421 and a (2-2)th guide surface 422 adjacent to each other. In an embodiment, the (1-1)th guide surface 411 and the (2-1)th guide surface 421 may face each other. In an embodiment, the (1-2)th guide surface 412 and the (2-2)th guide surface 422 may face each other.

In an embodiment, a distance L between the (1-1)th guide surface 411 and the (2-1)th guide surface 421 and/or a distance L between the (1-2)th guide surface 412 and the (2-2)th guide surface 422 may be smaller than the diameter D of the first AF ball b1. Accordingly, during the process in which the AF carrier 330 moves in the optical axis (OA) direction with respect to the camera housing 350, contact between the (1-1)th guide surface 411 and the (2-1)th guide surface 421 and contact between the (1-2)th guide surface 412 and the (2-2)th guide surface 422 may not occur. Accordingly, a wear phenomenon caused by contact of the first guide surface 411 or 412 with the second guide surfaces 421 or 422 and a movement obstruction phenomenon of the AF carrier 330 caused by contact with the camera housing 350 may be prevented.

In an embodiment not shown in the drawings, a third guide surface may be located inside the third guide groove 430. In an embodiment, the third guide surface may include a (3-1)th guide surface and a (3-2)th guide surface adjacent to each other. In an embodiment, a fourth guide surface may be located inside the fourth guide groove 440. In an embodiment, the fourth guide surface may include a (4-1)th guide surface and a (4-2)th guide surface adjacent to each other. In an embodiment, the (3-1)th guide surface and the (4-1)th guide surface may face each other. In an embodiment, the (3-2)th guide surface and the (4-2)th guide surface may face each other.

In an embodiment, a distance between the (3-1)th guide surface and the (4-1)th guide surface and/or a distance between the (3-2)th guide surface and the (4-2)th guide surface may be smaller than the diameter of the second AF ball b2. Accordingly, during the process in which the AF carrier 330 relatively moves in the optical axis (OA) direction with respect to the camera housing 350, contact between the (3-1)th guide surface and the (4-1)th guide surface and contact between the (3-2)th guide surface and the (4-2)th guide surface may not occur. Accordingly, a wear phenomenon caused by contact of the third guide surface with the fourth guide surfaces and a movement obstruction phenomenon of the AF carrier 330 caused by contact with the camera housing 350 may be prevented.

According to an embodiment, as shown in FIG. 8, the camera module 300 may include a structure in which the first AF ball b1 may be seated in the recess 400. In an embodiment, an imaginary circle coming in contact with a surface of the recess 400, the first guide surface 411 or 412, and/or the second guide surface 421 or 422 may have a diameter 2R' greater than or equal to the diameter D of the first AF ball b1. In an embodiment, a diameter R' of an imaginary circle may be a diameter of a largest circle of imaginary circles in contact with a surface located at a substantially lowest point in the recess 400 and in contact with the first guide surface 411 or 412 and the second guide surface 421 or 422. Accordingly, the first AF ball b1 may be in contact with a surface of the recess 400 based on the driving state of the AF carrier 330. In this way, at least one first AF ball can remain in contact with the floor of the groove. There would be no interference between the AF ball and the first seating part 351 during operation.

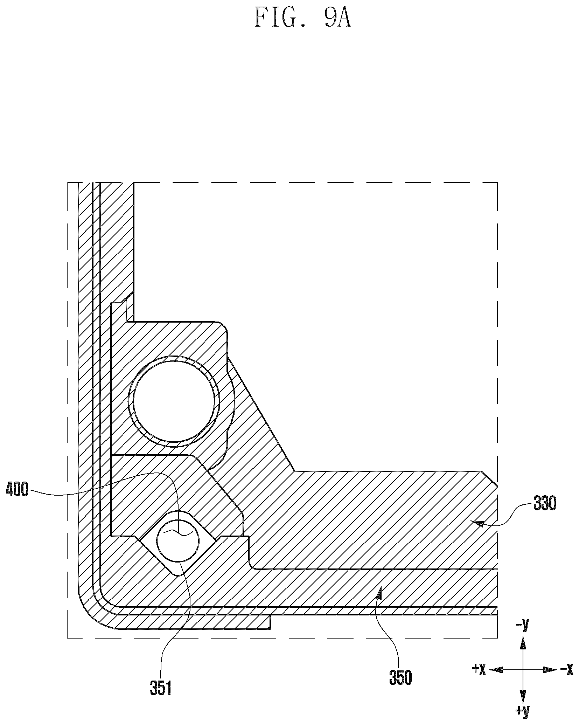

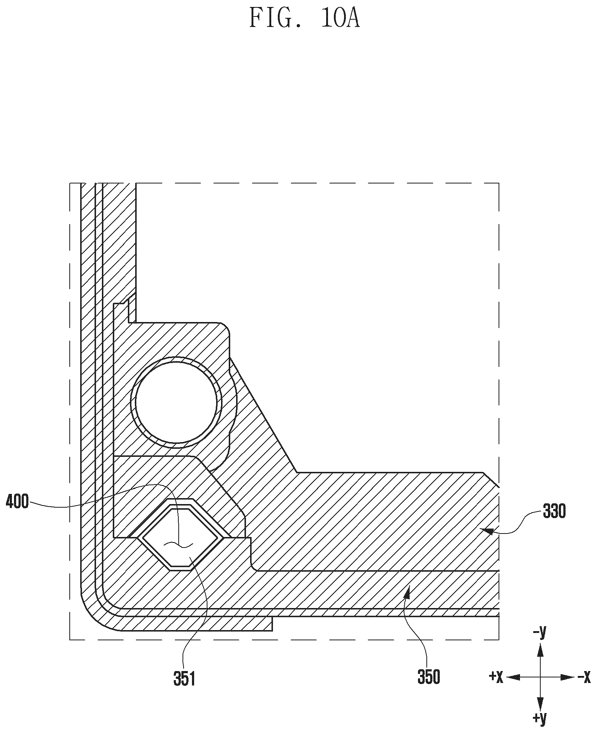

FIGS. 9A to 9D are views illustrating an embodiment in which a recess is disposed on a camera housing according to an embodiment of the disclosure. FIGS. 10A to 10C are views illustrating an embodiment in which a recess is disposed on a camera housing according to an embodiment of the disclosure. FIGS. 11A to 11C are views illustrating an embodiment in which a recess is disposed on an AF carrier according to an embodiment of the disclosure.

Hereinafter, with reference to FIGS. 9A to 10C, an embodiment that the recess 400 in which the first AF ball b1 is seated is configured in the first seating part 351 of the camera housing 350 will be described. FIGS. 11A to 11C illustrate an embodiment that the recess 400 in which the first AF ball b1 is seated is configured in the second seating part 331 of the AF carrier 330.

According to an embodiment, as shown in FIGS. 9A to 9D, the camera housing 350 may include the first seating part 351. In an embodiment, the first seating part 351 may correspond to a component of the camera housing 350 facing the first AF ball b1. In an embodiment, the first seating part 351 may be connected to the first guide groove 410. In an embodiment, the recess 400 may be disposed on the first seating part 351 of the camera housing 350. In an embodiment, the first AF ball b1 may be driven in the optical axis (OA) direction along the first guide groove 410 and seated on the recess 400 disposed on the first seating part 351 based on a driving state of the AF carrier 330.

In an embodiment, the recess 400 may be configured in various ways. For example, the recess 400 may correspond to a groove configured on the first seating part 351. In addition, the recess 400 may correspond to a space surrounded and configured through the partition wall 401 in the first seating part 351.

In an embodiment, referring to FIGS. 9A to 9D, in the recess 400, a surface in contact with the first AF ball b1 may be configured to be curved. Accordingly, the first AF ball b1 may be seated on the curved surface of the recess 400. In an embodiment, a radius of curvature of the curved surface of the recess 400 may be equal to or greater than that of the first AF ball b1.

In an embodiment, referring to FIGS. 10A to 10C, the recess 400 may be surrounded and configured by the partition wall 401 disposed on the first seating part 351 of the camera housing 350. In an embodiment, in the recess 400, a surface in contact with the first AF ball b1 may be configured to be flat. In this case, the depth a of the recess 400 may be equal to the height of the partition wall 401. In an embodiment, in the recess 400, a surface in contact with the first AF ball b1 may be configured as a curved surface corresponding to the first AF ball b1.

According to an embodiment, as shown in FIGS. 11A to 11C, the AF carrier 330 may include the second seating part 331. In an embodiment, the second seating part 331 may correspond to a component of the camera housing 350 facing the first AF ball b1. In an embodiment, the second seating part 331 may be connected to the second guide groove 420. In an embodiment, the recess 400 may be disposed on the second seating part 331 of the AF carrier 330. In an embodiment, the first AF ball b1 may be driven in the optical axis (OA) direction along the second guide groove 420 and seated on the recess 400 disposed on the second seating part 331 based on a driving state of the AF carrier 330.

In an embodiment, referring to FIGS. 11A to 11C, the recess 400 may be surrounded and configured by the partition wall 401 disposed on the second seating part 331 of the AF carrier 330. In an embodiment, in the recess 400, a surface in contact with the first AF ball b1 may be configured to be flat. In this case, the depth a of the recess 400 may be equal to the height of the partition wall 401.

In an embodiment, in the recess 400, a surface in contact with the first AF ball b1 may be configured to be curved. Accordingly, the first AF ball b1 may be seated on the curved surface of the recess 400. In an embodiment, a radius of curvature of the curved surface of the recess 400 may be equal to or greater than that of the first AF ball b1.

An embodiment disclosed herein may suggest a method for reducing the height of the camera module 300 while maintaining the optical axis direction driving distance Y of the first AF ball b1. For example, the height A' of the AF carrier and the height B' of the camera housing may be reduced while the length of the guide groove 410 or 420 in the optical axis (OA) direction, in which the first AF ball b1 is disposed, and the driving length Y of the first AF ball b1 in the optical axis direction, and the driving length Y of the AF carrier 330 in the optical axis direction are maintained. For example, the height A' of the AF carrier and the height B' of the camera housing may be reduced by the first length b. In an embodiment, the first length b may be smaller than or equal to the depth a of the recess 400. Therefore, the camera module 300 having reduced thickness without sacrificing performance may help the electronic device 101 slim down.

A camera module 300 (e.g., the camera module 180 in FIG. 1) according to an embodiment of the disclosure may include a lens assembly 310, an AF carrier 330 in which at least a portion of the lens assembly is located, a camera housing 350 configured to receive the AF carrier, an AF actuator 360 configured to drive the AF carrier to move in an optical axis (OA) direction with respect to the camera housing and having a portion disposed on the AF carrier and the camera housing, a first guide groove 410 extending on a surface of the camera housing in the optical axis direction, a second guide groove 420 extending on a surface of the AF carrier in the optical axis direction and facing the first guide groove, at least one first AF ball b1 disposed between the first guide groove and the second guide groove, and a recess 400 disposed on one of the camera housing and the AF carrier and facing the first AF ball.

In addition, the camera housing may include a first seating part 351 connected to the first guide groove, facing the first AF ball, and having the recess configured thereon.

In addition, the AF carrier may include a second seating part 331 connected to the second guide groove, facing the first AF ball, and having the recess configured thereon.

In addition, the first AF ball may be configured to come into contact with the recess based on a driving state of the AF carrier.

In addition, a distance L between a first guide surface located on the first guide groove and a second guide surface located on the second guide groove and facing the first guide surface may be smaller than a diameter D of the first AF ball.

In addition, in a state in which the first AF ball is in contact with a surface of the recess, a diameter 2R' of an imaginary circle with a radius equal to a distance between the center of a first AF ball and a surface of the recess may be greater than the diameter D of a first AF ball.

In addition, a driving distance Y of the first AF ball in the optical axis direction on the first guide groove and the second guide groove may be equal to or greater than 0.5 times a driving distance X of the AF carrier in the optical axis direction with respect to the camera housing.

In addition, a length of the first guide groove and the second guide groove in the optical axis direction may be equal to or greater than a value acquired by summing the driving distance X of the AF carrier in the optical axis direction and the driving distance Y of the first AF ball in the optical axis direction.

In addition, a first height A' of a surface of the AF carrier, on which the second guide groove is disposed may be equal to or greater than a value acquired by subtracting a depth a of the recess in the optical axis direction from a sum of a sum C of diameters of the first AF ball and the driving distance X of the AF carrier in the optical axis.

In addition, a second height B' of a surface of the camera housing, on which the first guide groove is disposed, may be equal to or greater than a value acquired by summing the first height A' of the surface of the AF carrier and the driving distance X of the AF carrier in the optical axis direction.

In addition, a third guide groove 430 disposed on a surface identical to the surface on which the first guide groove is disposed in the camera housing, a fourth guide groove 440 disposed on a surface identical to the surface on which the second guide groove is disposed in the AF carrier, and at least one second AF ball b2 disposed between the third guide groove and the fourth guide groove may be included.

In addition, the length of the first guide groove and the second guide groove in the optical axis direction may be longer than a length of the third guide groove and the fourth guide groove in the optical axis direction.

In addition, the AF actuator may include an AF magnet 361 located between the second guide groove and the fourth guide groove on a surface of the AF carrier and an AF coil 362 disposed in the camera housing and facing the AF magnet.

In addition, a shield can 320 including an opening 321 in which the lens assembly is located and configured to cover the camera housing may be further included.

In addition, an OIS carrier 340 configured to receive the lens assembly and disposed in the AF carrier to move in a direction perpendicular to the optical axis direction with respect to the camera housing, an OIS actuator configured to drive the OIS carrier 340 to move in a direction perpendicular to the optical axis direction with respect to the camera housing and having a portion disposed in the OIS carrier 340 and the camera housing, and at least one OIS ball disposed between the OIS carrier 340 and the camera housing may be further included.

In addition, the OIS actuator may include an OIS magnet disposed on a surface of the OIS carrier 340 and an OIS coil disposed in the camera housing and facing the OIS magnet.

An electronic device 101 according to an embodiment of the disclosure may include a lens assembly 310, an AF carrier 330 in which at least a portion of the lens assembly is located, a camera housing 350 configured to receive the AF carrier, an AF actuator 360 configured to drive the AF carrier to move in an optical axis (OA) direction with respect to the camera housing and having a portion disposed in the AF carrier and the camera housing, a first guide groove 410 extending on a surface of the camera housing in the optical axis direction, a second guide groove 420 extending on a surface of the AF carrier in the optical axis direction and facing the first guide groove, at least one first AF ball b1 disposed between the first guide groove and the second guide groove, and a recess 400 disposed on one of the camera housing and the AF carrier and facing the at least one first AF ball. More generally, the present application concerns an electronic device comprising at least a camera module as described above.

In addition, the first AF ball may be configured to come into contact with the recess based on a driving state of the AF carrier.

In addition, a distance L between a first guide surface located on the first guide groove and a second guide surface located on the second guide groove and facing the first guide surface may be smaller than a diameter D of the first AF ball.

In addition, in a state in which the first AF ball is in contact with a surface of the recess, a diameter 2R' of an imaginary circle with a radius equal to a distance between the center of a first AF ball and a surface of the recess may be greater than the diameter D of the a AF ball.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be understood that in addition to the embodiments disclosed above, the disclosure contemplates and includes embodiments based on a combination of two or more of the above disclosed embodiments and embodiments including a combination of the above features. The disclosure is not limited to the embodiments disclosed herein. In other words, the absence of an explicit indication that two features may be combined or two embodiments may be combined does not mean that such combinations are not contemplated, but rather that such combinations are to be viewed as encompassed herein.

## Claims

1. An electronic device (101) including a camera module (180, 330), the camera module comprising:
a lens assembly (310);
an AF carrier (330), the lens assembly being fixed to the AF carrier;
a camera housing (350) configured to receive the AF carrier;
an AF actuator (360) configured to drive the AF carrier to move in an optical axis (OA) direction with respect to the camera housing and having a portion disposed on the AF carrier and the camera housing;
a first guide groove (410) extending on a surface of the camera housing in the optical axis direction;
a second guide groove (420) extending on a surface of the AF carrier in the optical axis direction and facing the first guide groove;
at least one first AF ball (b1) disposed between the first guide groove and the second guide groove, the at least one first AF ball being configured to guide movement of the AF carrier in the optical axis direction with respect to the camera housing.; and
a recess (400) formed in one of the camera housing and the AF carrier and facing the at least one first AF ball in the optical axis direction.

2. The camera module of claim 1, wherein the camera housing comprises a first seating part (351) connected to the first guide groove, facing the at least one first AF ball, and having the recess configured thereon.

3. The camera module of claim 1, wherein the AF carrier comprises a second seating part (331) connected to the second guide groove, facing the at least one first AF ball, and having the recess configured thereon.

4. The camera module of claim 1, wherein the first AF ball is configured to come into contact with the recess, based on a driving state of the AF carrier.

5. The camera module of any of the previous claims, wherein a distance (L) between a first guide surface located on the first guide groove and a second guide surface located on the second guide groove and facing the first guide surface is smaller than a diameter (D) of the first AF ball.

6. The camera module of any of the previous claims, wherein a diameter (2R') of an imaginary circle in contact with a surface located inside the recess, the first guide surface located in the first guide groove, and the second guide surface located in the second guide groove and facing the first guide surface is greater than a diameter (D) of the first AF ball.

7. The camera module of any of the previous claims, wherein a driving distance (Y) of the first AF ball in the optical axis direction is equal to or greater than 0.5 times a driving distance (X) of the AF carrier in the optical axis direction with respect to the camera housing.

8. The camera module of any of the previous claims, wherein a length of the first guide groove and the second guide groove in the optical axis direction is equal to or greater than a value acquired by summing a driving distance (X) of the AF carrier in the optical axis direction and a driving distance (Y) of the first AF ball in the optical axis direction.

9. The camera module of any of the previous claims, wherein a first height (A') of a surface of the AF carrier, on which the second guide groove is disposed, is equal to or greater than a value acquired by subtracting a depth (a) of the recess in the optical axis direction from a sum of a sum (C) of diameters of the first AF ball and a driving distance (X) of the AF carrier in the optical axis.

10. The camera module of claim 9, wherein a second height (B') of a surface of the camera housing, on which the first guide groove is disposed, is equal to or greater than a value acquired by summing the first height (A') of the surface of the AF carrier and a driving distance (X) of the AF carrier in the optical axis direction.

11. The camera module of any of the previous claims, further comprising:
a third guide groove (430) formed to extend in the optical axis direction disposed on a surface identical to the surface on which the first guide groove is disposed in the camera housing;
a fourth guide groove (440) formed to extend in the optical axis direction disposed on a surface identical to the surface on which the second guide groove is disposed in the AF carrier; and
at least one second AF ball (b2) disposed between the third guide groove and the fourth guide groove.

12. The camera module of claim 11, wherein a length of the first guide groove and the second guide groove in the optical axis direction is configured to be longer than a length of the third guide groove and the fourth guide groove in the optical axis direction.

13. The camera module of any of claims 10 to 12, wherein the AF actuator comprises:
an AF magnet (361) located between the second guide groove and the fourth guide groove on a surface of the AF carrier; and
an AF coil (362) disposed in the camera housing and facing the AF magnet.

14. The camera module of any of the previous claims, further comprising a shield can (320) comprising an opening (321) in which the lens assembly is located and configured to cover at least partially the camera housing.

15. The camera module of any of the previous claims, further comprising:
an OIS carrier (340) configured to accommodate the lens assembly and disposed in the AF carrier to move in a direction perpendicular to the optical axis direction with respect to the camera housing;
an OIS actuator configured to drive the OIS carrier (340) to move in a direction perpendicular to the optical axis direction with respect to the camera housing and having a portion disposed in the OIS carrier (340) and the camera housing; and
at least one OIS ball disposed between the OIS carrier (340) and the camera housing.
wherein the OIS actuator comprises:
an OIS magnet disposed on a surface of the OIS carrier (340); and
an OIS coil disposed in the camera housing and facing the OIS magnet.
